# EUROPEAN PATENT APPLICATION

(11) **EP 4 797 572 A1**
(43) Date of publication of application: **26.08.2026**
(21) Application number: 25159437.0
(22) Date of filing: 21.02.2025
(51) Int. Cl.: H04B 10/2507, H04B 10/2513, H04B 10/2569, H04B 10/61

(54) **APPARATUS AND METHOD FOR EQUALIZER TRAINING IN A COHERENT RECEIVER**

(71) Applicant: Nokia Solutions and Networks Oy, 02610 Espoo (FI)
(72) Inventor: VAN ROMPAEY, Robbe, 2018 Antwerp (BE); LANNEER, Wouter, 2018 Antwerp (BE); BREYNE, Laurens, 2018 Antwerp (BE)
(74) Representative: Zinsinger, Norbert

(57) **Abstract**

The present invention discloses an apparatus for use by a coherent receiver, comprising means for: obtaining a first set of coefficients (***A***⁺) indicating a first adaptive filter (A) configured to reduce at least part of polarization mode dispersion in an equalizer of the coherent receiver and a second set of coefficients (***w***⁺) indicating a second adaptive filter (w) configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A***⁺) and the second set of coefficients (***w***⁺), wherein the gains of the first updated set of coefficients (***A***⁺⁺) have a predetermined level, and wherein, the output of the equalizer based on the first set of coefficients (***A***⁺) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

## Description

### Field of the invention

Various example embodiments relate to communication technology, specifically to optical network.

### Background

Conventionally, passive optical network (PON) is based on intensity-modulation/direct detection (IM/DD) technology, because of its simple optical-frontend design and low-cost. However, with an increasing demand in the data rate of PON, it will be very challenging to design future high speed PON system based on IM-DD with data rates of 200Gbit/s and beyond using a single wavelength channel because of various limitations.

In-phase and quadrature modulation (IQM) and coherent reception is considered as a potential solution for long-reach (e.g., >40 km) and Very High Speed PON (VHSP) with data rates exceeding 100 Gbit/s. The high spectral efficiency enables high data rates, while the coherent reception offers improved sensitivities and the ability to fully compensate channel impairments like chromatic dispersion (CD). Coherent PON (CohPON) may allow for higher split ratios and longer fiber reaches due to the improved sensitivity over IM/DD. The ability to effectively compensate CD allows CohPON to operate in the C-band, where more optical spectrum is available.

Dynamic channel equalization is a key digital signal processing (DSP) block to compensate for polarization mixing and inter-symbol interference (ISI) due to any residual CD and bandwidth (BW) limitations. Dynamic channel equalization is typically preceded by a static equalizer for CD compensation in coherent systems.

Two different polarizations of light that propagate in optical fiber will get mixed and delayed differently due to Polarization Mode Dispersion (PMD). Polarization changes can be significant in PON due to the location of the fibers (fiber close to train rails, aerial fiber exposed to heavy weather conditions like storms, lighting, ...). It is desired that the dynamic channel equalizer is capable of tracking fast polarization changes to maintain signal lock and prevent abrupt signal quality degradation.

There are training algorithms for simplified dynamic channel equalizer structures in coherent receivers that can effectively track low rotation speeds of 1 MHz. However, their performance degrades as the rotation speed increases.

Furthermore, the power consumption of the adaptive equalizer scales with the number of taps, thus a low complex equalizer structure typically results in a lower power consumption.

Thus, there is a need to improve polarization tracking for low complex equalizer structures.

### Summary of the Invention

The invention is set out in the appended set of claims.

According to a first aspect of the invention, there is provided an apparatus for use by a coherent receiver, comprising means for: obtaining a first set of coefficients (***A**⁺*) indicating a first adaptive filter *(A)* configured to reduce at least part of polarization mode dispersion in an equalizer of the coherent receiver and a second set of coefficients (***w***⁺) indicating a second adaptive filter (w) configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to a second aspect of the invention, there is provided a method, comprising: obtaining a first set of coefficients (***A**⁺*) indicating a first adaptive filter *(A)* configured to reduce at least part of polarization mode dispersion in an equalizer of the coherent receiver and a second set of coefficients (***w***⁺) indicating a second adaptive filter (w) configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to a third aspect of the invention, there is provided a computer program comprising instructions for causing an apparatus to perform at least the following: obtaining a first set of coefficients (***A**⁺*) indicating a first adaptive filter *(A)* configured to reduce at least part of polarization mode dispersion in an equalizer of the coherent receiver and a second set of coefficients (***w***⁺) indicating a second adaptive filter (w) configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to a fourth aspect of the invention, there is provided an apparatus comprising at least one processor and at least one memory including computer program code, the at least one memory and the computer program code configured to with the at least one processor, cause the apparatus at least to perform: obtaining a first set of coefficients (***A**⁺*) indicating a first adaptive filter *(A)* configured to reduce at least part of polarization mode dispersion in an equalizer of the coherent receiver and a second set of coefficients (***w***⁺) indicating a second adaptive filter (w) configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to a fifth aspect of the invention, there is provided a non-transitory computer readable medium comprising program instructions for causing an apparatus to perform at least the following: obtaining a first set of coefficients (***A**⁺*) indicating a first adaptive filter **(A)** configured to reduce at least part of polarization mode dispersion in an equalizer of the coherent receiver and a second set of coefficients (***w***⁺) indicating a second adaptive filter **(w)** configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to a sixth aspect of the invention, there is provided a computer readable medium comprising program instructions for causing an apparatus to perform at least the following: obtaining a first set of coefficients (***A**⁺*) indicating a first adaptive filter **(A)** configured to reduce at least part of polarization mode dispersion in an equalizer of the coherent receiver and a second set of coefficients (***w***⁺) indicating a second adaptive filter **(w)** configured to reduce at least part of the inter-symbol interference in the equalizer of the coherent receiver, determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺), providing the first updated set of coefficients (***A***⁺⁺) and the second updated set of coefficients (***w***⁺⁺) to the first filter and the second filter respectively.

According to the example embodiments, the equalizer adaptation process is improved, such that the maximum angular rotation speed that can be tracked by the equalizer is considerably increased, for example by a factor 10 in comparison with a conventional full butterfly channel equalizer.

### Brief description of the figures

For a more complete understanding of example embodiments of the present invention, reference is now made to the following descriptions taken in connection with the accompanying drawings in which:
Figure 1 shows a schematic block diagram of a DSP receive chain of a coherent receiver according to state of the art;
Figure 2 shows a schematic diagram of an example training loop for the equalizer shown in Figure 1;
Figures 3a and 3b show schematic diagrams of two simplified channel equalizers;
Figures 4a and 4b schematic diagrams of example training loops according to prior art for the equalizers shown in Figures 3a and 3b;
Figure 5a and 5b show schematic block diagrams of example application scenarios of the apparatus according to example embodiments;
Figure 6a shows a schematic block diagram of the apparatus 201 according to an embodiment;
Figure 6b shows a schematic block diagram of the apparatus 202 according to another embodiment;
Figure 7a and 7b show schematic block diagrams of example application scenarios of the apparatus 203 and apparatus 204 according to further embodiments;
Figure 8a and 8b show schematic block diagrams of further functions of the apparatus 203 and 204 according to the previous embodiments;
Figure 9 shows a schematic block diagram of further functions of an apparatus 205 according to a further embodiment;
Figure 10 shows a flow diagram according to example methods implementing various embodiments;
Figure 11 shows an example block diagram of an apparatus 201 operating in accordance with various embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

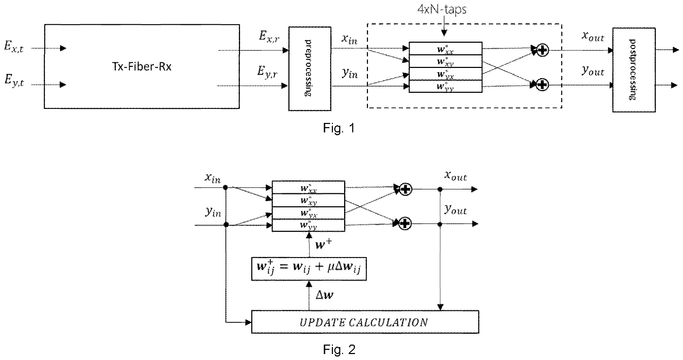

Figure 1 shows a schematic block diagram of a DSP receive chain of a coherent receiver according to state of the art.

As shown in Figure 1, at the transmitter, the orthogonal x- and y- polarizations of the optical wave are modulated independently. The transmission signal *E_{x,t}, E_{y,t}* is provided to a fiber respectively on x- and y- polarization. The optical fiber typically conserves this orthogonality, but due to secondary effects like vibrations, production tolerances, etc., the orthogonal set of polarizations may be rotated while preserving the orthogonality.

The received signals *E_{x,r}, E_{y,r}* respectively on x- and y- polarization are converted to digital signals *xᵢₙ,yᵢₙ* and then processed by different DSP blocks to recover the original transmitted symbols. These DSP blocks are responsible for timing recovery, IQ imbalances compensation, static equalization (for time-invariant impairments like CD), frequency and phase recovery, etc. One block that is marked in dotted frame in Figure 1 is the channel equalizer by means of four N-taps adaptive filters, organized in a so-called butterfly structure, which is responsible for compensating time-variant impairments like PMD and residual static impairments (e.g. CD that was not cancelled by the static CD equalizer, bandwidth limitations at the transmitter and/or receiver hardware). The output of the equalizer *xₒᵤₜ, yₒᵤₜ* is provided to postprocessing.

Figure 2 shows a schematic diagram of an example training loop for the equalizer shown in Figure 1.

For simplicity, only part of the coherent receiver is shown in the Figure 2. A skilled person should understand that the coherent receiver may comprise further hardware and/or function blocks for its operation.

In the example shown in Figure 2, the training comprises several steps. The first step is the filtering operation, which produces the output symbols {*xₒᵤₜ,yₒᵤₜ*}from the input symbols {*xᵢₙ,yᵢₙ*} as follows: ${i}_{out} \left(n\right) = {w}_{xi}^{∗} {x}_{in}^{T} \left(n\right) + {w}_{yi}^{∗} {y}_{in}^{T} \left(n\right)$ with *i* ∈ {*x, y*}. where ${w}_{ij} = \left[{w}_{ij}^{1},…,{w}_{ij}^{N}\right]$ with *i*, *j* ∈ {*x, y*}*,* ${i}_{in} \left(n\right) = \left[{i}_{in}\left(n\right),…,{i}_{in}\left(n-N+1\right)\right]$ with *i* ∈ {*x, y*}, and w* and ***w**^{T}* denotes the complex conjugate and transpose of w respectively. n denotes the symbol index and will be left out in the rest of the document for ease of notation. The four different filters with N taps each in the full butterfly filter are thus represented as ***w**ₓₓ, **w**_{yx}, **w**_{xy}, **w**_{yy}.*

The following update calculation step determines the filter updates {Δ***w**ₓₓ,* Δ***w**_{xy},* Δ***w**_{yx},* Δ***w**_{yy}*} for all four N-taps filters. For this, an error signal is computed from the output symbols {*xₒᵤₜ, yₒᵤₜ*} according to a predefined cost function. Examples are the error signals for the constant modulus algorithm (CMA) and decision-directed least mean square (DD-LMS): ${e}_{i} = \left\{\begin{matrix}{i}_{out} \left(1-{\left|{i}_{out}\right|}^{2}\right) & \left(CMA\right) \\ DD \left({i}_{out}\right) - {i}_{out} & \left(DD-LMS\right)\end{matrix}\right. i ∈ \left\{x, y\right\} .$

Here *DD*(*iₒᵤₜ*) denotes a decision device that maps *iₒᵤₜ* to the closest constellation point of the transmitted symbol alphabet. These error signals are correlated with the input symbols {*xᵢₙ, yᵢₙ*} to calculate the filter updates {Δ***w**ₓₓ,* Δ***w**_{xy},* Δ***w**_{yx},* Δ***w**_{yy}*} for the 4xN-taps filters: $Δ {w}_{ij} = {i}_{in} {e}_{j}^{∗} i , j ∈ \left\{x, y\right\} .$

Finally, the updated filter taps $\left\{{w}_{xx}^{+}, {w}_{xy}^{+}, {w}_{yx}^{+}, {w}_{yy}^{+}\right\}$ are computed by adding a correction term to the current filter taps. This correction term is given by multiplying the filter updates {Δ***w**ₓₓ,* Δ***w**_{xy},* Δ***w**_{yx},* Δ***w**_{yy}*} with a certain step size *µ*: ${w}_{ij}^{+} = {w}_{ij} + μ Δ {w}_{ij} i , j ∈ \left\{x, y\right\} .$

This training loop is continuously executed, due to the time-variant effects in the channel. Block-based updates can also be used by averaging Δ***w**ᵢⱼ* over a block of symbols. This is possible for all proposed training methods in this invention and will hence be left out for conciseness. Note that *µ* can initially be set high and decreased with time to improve the speed of convergence while maintaining low noise. However, it can never be too low, since it needs to be able to react to sudden polarization changes.

The number of taps in the 4xN-taps full butterfly filter significantly impacts both its tracking performance (convergence speed) and computational complexity (power consumption). Typically, N=30-40 baudrate spaced taps are required for effective compensation of BW limitations and CD, but it increases computational complexity. Also, the maximal step size for stable operation is proportional to the number of taps, which limits its polarization tracking capability. Conversely, a small number of taps allows for faster tracking of polarization changes with higher step sizes and lower complexity but results in a noisy filtered signal, hindering equalizer training. Therefore, a solution is needed to optimize the number of taps and address this trade-off.

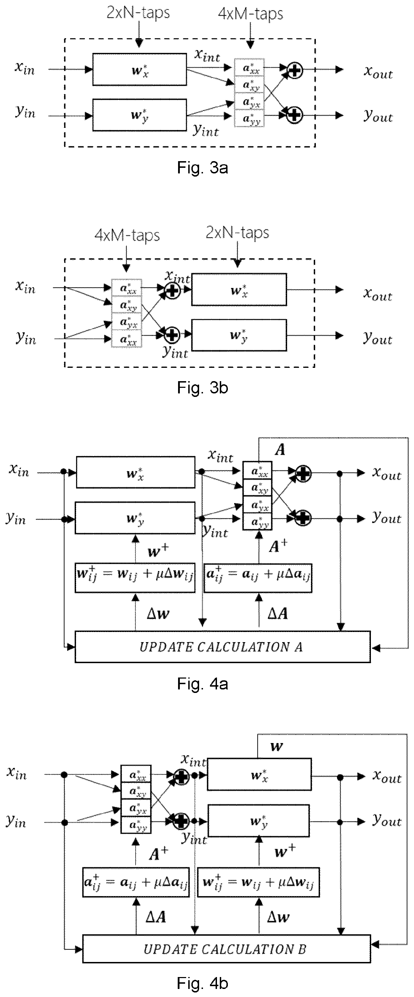

Figures 3a and 3b show schematic diagrams of two simplified channel equalizers.

In the examples shown in Figures 3a and 3b, there are two sub-filters. Specifically, one sub-filter, denoted as ISI-filter w, is configured to reduce at least part of the ISI in the equalizer and may comprise two Single-Input Single-Output (SISO) filters respectively with N taps. The other sub-filter, denoted as POL-filter A, is configured to reduce at least part of PMD in the equalizer and may comprise a Multi-Input Multi-Output (MIMO) filter with M filter taps in each branch. $w = \left[{w}_{x}, {w}_{y}\right] , A = \left[\begin{matrix}{a}_{xx} & {a}_{xy} \\ {a}_{yx} & {a}_{yy}\end{matrix}\right] ,$ wherein, ${w}_{i} = \left[{w}_{i}^{1},…,{w}_{i}^{N}\right]$ with *i* ∈ {*x, y*}*,* ${a}_{ij} = \left[{a}_{ij}^{1},…,{a}_{ij}^{M}\right]$ with *i*, *j* ∈ {*x, y*}. N and M are integer numbers. The complexity of the equalizer is significantly reduced when M<<N comparing to the four N-taps full butterfly filter as shown in Figure 2. That is, the total number of taps is lower.

In Figures 3a and 3b, the number of SISO filters comprised in the ISI-filter w is shown as two, and the POL-filter A is shown as MIMO filter with two input ports and two output ports, namely 2×2 MIMO filter. A skilled person should understand the numbers are merely given as an example. Generally, the ISI-filter w may comprise a plurality of SISO filters corresponding to respective input/output port of the POL-filter. Specifically, for example, the 2×2 POL-filter comprising complex valued taps shown in Figures 3a and 3b may be replaced by a 4x4 filter comprising real valued taps.

In Figures 3a and 3b, the ISI-filter w without cross taps reduces the complexity of the ISI-filter with approximately a factor 2, compared to a 4xN-taps full butterfly filter and allows the ISI-filter to compensate for effects like CD and BW limitations. The PMD is then compensated using the POL-filter A with cross taps.

In Figures 3a and 3b, the ISI filter and the POL filter are cascaded differently. Specifically, in Figure 3a, the ISI filter is configured before the POL filter. In the following, the equalizer configuration as shown in Figure 3a may be referred as ISI-POL configuration. In Figure 3b, the POL filter is configured before the ISI filter. In the following, the equalizer configuration as shown in Figure 3b may be referred as POL-ISI configuration.

However, the number of taps in the 4xM butterfly filter is strongly constrained M « N so that the total complexity remains lower than the 4xN-taps full butterfly filter. Hence the POL-filter A alone cannot fully compensate CD and BW limitations, which requires a larger number of taps. The cascading of both filters then combines both functions of the equalizer, i.e. ISI and PMD compensation, in a low-complex way.

These simplified filter structures remain a simplification with fewer taps than the 4xN-full butterfly equalizer. Hence, they cannot reach the same steady-state behavior for time-invariant channels.

Figure 4a and 4b show schematic diagrams of example training loops according to prior art for the equalizers shown in Figures 3a and 3b.

There are different methods to calculate the updates Δ***A*** and Δ***w*** of the POLand ISI-filter respectively. In one example, the updates may be calculated independent of each other, with thus two separate training loops for **A** and **w.** The error may be calculated directly at the output of each filter. This required defining special cost functions for {*xᵢₙₜ, yᵢₙₜ*}*,* since these internal signals will still contain PMD or ISI in Figure 4a and Figure 4b respectively. In another example, the error may be only calculated on the output symbols {*xₒᵤₜ, yₒᵤₜ*}*.* The principle of backpropagation (also used in the training of neural networks) may be used to determine both updates.

It is observed that both training methods experience limited polarization tracking capabilities. This is due to scaling ambiguities between A and w, that has no effect on the output of the filter, but still effects the computed updates Δ***A*** and Δ***w***.

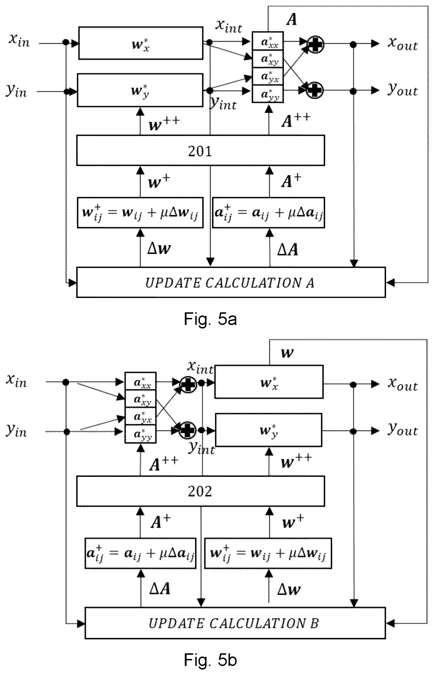

Figures 5a and 5b show schematic block diagrams of example application scenarios of the apparatus according to example embodiments.

In the embodiment shown in Figures 5a and 5b, the apparatus 201 and 202 according to various embodiments may be implemented in the coherent receiver. In another example, the apparatus 201 may also be implemented outside the coherent receiver and communicatively connected to the coherent receiver. The coherent receiver may be implemented at an ONU or at an OLT.

Specifically, the apparatus 201 may be implemented in an equalizer with ISI-POL configuration, and the apparatus 202 may be implemented in an equalizer with POL-ISI configuration. For simplicity, function blocks same or similar as described with respect to previous Figures will not be repeated.

The apparatus 201 and the apparatus 202 are implemented to adapt the coefficients that various training algorithms provide as new coefficients for a next training iteration for the respective filters.

The apparatus 201 and the apparatus 202 are respectively configured to obtain a first set of coefficients ***A**⁺* indicating a first adaptive filter ***A,*** POL filter, configured to reduce at least part of polarization mode dispersion in an equalizer of the coherent receiver and a second set of coefficients ***w***⁺ indicating a second adaptive filter w, ISI filter configured to reduce at least part of the inter-symbol interference in the equalizer of the coherent receiver.

Specifically, various training methods may be implemented to determine the first set of coefficients ***A**⁺* and the second set of coefficients ***w***⁺ to adaptively update the coefficients of the first filter and the second filter.

Specifically, in the embodiments shown in Figures 5a and 5b, the first set of coefficients ***A**⁺* and the second set of coefficients ***w***⁺ may be obtained from the equalizer of the coherent receiver.

In another example which will be explained later, the first set of coefficients ***A**⁺* and the second set of coefficients ***w***⁺ may be determined by the apparatus 201 and the apparatus 202.

The apparatus 201 and the apparatus 202 are respectively configured to determine a first updated set of coefficients ***A***⁺⁺ and a second updated set of coefficients ***w***⁺⁺ based on the first set of coefficients ***A**⁺* and the second set of coefficients ***w***⁺, wherein the gains of the first updated set of coefficients ***A***⁺⁺ have a predetermined level, and wherein, the output of the equalizer based on the first set of coefficients ***A**⁺* and the second set of coefficients ***w***⁺ is approximately same as the output of the equalizer based on the first updated set of coefficients ***A***⁺⁺ and the second updated set of coefficients ***w***⁺⁺.

The gains of the first updated set of coefficients ***A***⁺⁺ may comprise gains corresponding to respective input ports/output ports of the first filter **A** connected to the second filter **w.** Specifically, in the example as shown in Figure 5a, the gains of the first updated set of coefficients ***A***⁺⁺ may comprise the gains corresponding to respective input ports of the POL-filter A. In the example as shown in Figure 5b, the gains of the first updated set of coefficients ***A***⁺⁺ may comprise the gains corresponding to respective output ports of the POL-filter A.

Specifically, the predetermined level for the gains of the first updated set of coefficients ***A***⁺⁺ may be any value, for example, 0.1, 1, 2 or 5 etc. In one embodiment, the predetermined level is 1. The processing of bringing the gains of the first updated set of coefficients ***A***⁺⁺ to 1, for example by scaling the first set of coefficients ***A**⁺* without significantly changing the output of the equalizer may also be referred to as jointly normalizing in the present disclosure. In one example, the output of the equalizer based on the first updated set of coefficients ***A***⁺⁺ and the second updated set of coefficients ***w***⁺⁺ may comprise small scaling and/or offsets compared to the output of the equalizer based on the first set of coefficients ***A**⁺* and the second set of coefficients ***w***⁺. In one example, every gain of the first updated set of coefficients ***A***⁺⁺ may have a different predetermined level.

Specifically, in one embodiment, the apparatus 201 and the apparatus 202 may be respectively configured to scale the first set of coefficients ***A***⁺, such that the gains of the first updated set of coefficients ***A***⁺⁺ reaches the predetermined level, and to scale the second set of coefficients ***w***⁺, thereby obtaining the second updated set of coefficients ***w***⁺⁺. Wherein, the scaling of the first set of coefficients ***A**⁺* is compensated in the second updated set of coefficients ***w***⁺⁺.

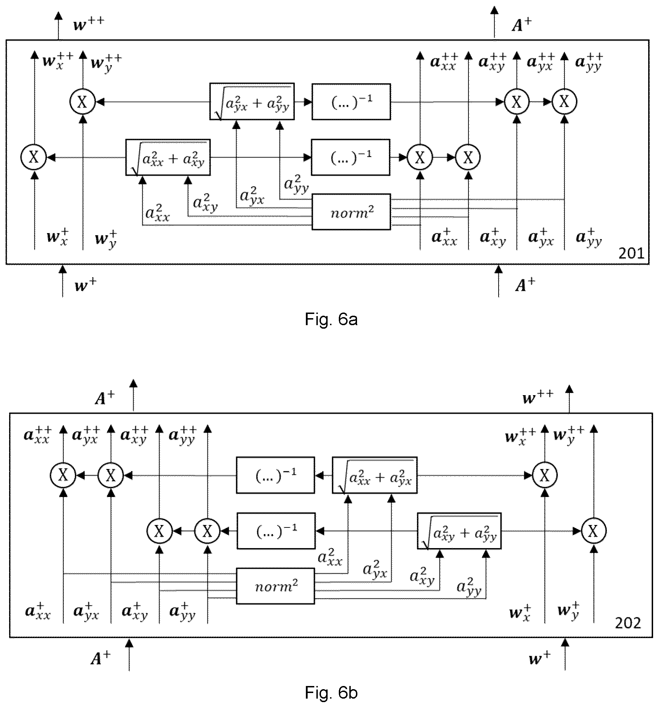

Figure 6a shows a schematic block diagram of the apparatus 201 according to an embodiment.

Figure 6b shows a schematic block diagram of the apparatus 202 according to another embodiment.

In Figures 6a and 6b, the apparatus 201 is suitable for use by an equalizer with ISI-POL configuration, and the apparatus 202 is suitable for use by an equalizer with POL-ISI configuration. More specifically, in Figures 6a and 6b, ***a**_{xy}* and ***a**_{yx}* have switched places because of the switched cascade order of the first filter A and the second filter **w.**

Specifically, the first set of coefficients ***A**⁺* comprises a subset of direct tap coefficients ${a}_{xx}^{+} , {a}_{yy}^{+}$ and a subset of cross tap coefficients ${a}_{xy}^{+} , {a}_{yx}^{+}$.

Specifically, ${a}_{xx}^{+}$ represents a measure for the contribution of the x input polarization to the x output polarization, ${a}_{yy}^{+}$ represents a measure for the contribution of the y input polarization to the y output polarization, ${a}_{xy}^{+}$ represents a measure for the contribution of the x input polarization to the y output polarization, ${a}_{yx}^{+}$ represents a measure for the contribution of the y input polarization to the x output polarization.

Accordingly, the first updated set of coefficients ***A***⁺⁺ comprises ${a}_{xx}^{+ +} , {a}_{xy}^{+ +} , {a}_{yx}^{+ +} , {a}_{yy}^{+ +}$.

In the example shown in Figure 6a, the gain corresponding to the first input port *xᵢₙₜ* of the first filter ***A*** may be determined as the gain of the first row of the coefficient matrix of the first filter **A,** and may be estimate from the energy of a pair of direct tab coefficients and cross tab coefficients ***a**ₓₓ,* and ***a**_{xy},* corresponding to the gain from the first input port *xᵢₙₜ* to all output ports *xₒᵤₜ, yₒᵤₜ.* Meanwhile, the gain corresponding to the second input port *yᵢₙₜ* of the first filter ***A*** may be determined as the gain of the second row of the coefficient matrix of the first filter **A,** and may be estimated from the energy of the other pair of direct tab coefficients and cross tab coefficients ***a**_{yx},* and ***a**_{yy},* corresponding to the gain from the second input port *yᵢₙₜ* to all output ports *xₒᵤₜ*, *yₒᵤₜ.*

Similarly, in the example shown in Figure 6b, the gain corresponding to the first output port *xᵢₙₜ* of the first filter ***A*** may be determined as the gain of the first column of the coefficient matrix of the first filter **A,** and may be estimate from the energy of a pair of direct tab coefficients and cross tab coefficients ***a**ₓₓ,* and ***a**_{yx},* corresponding to the gain from all input ports *xᵢₙ*, *yᵢₙₜ* to the first output port *xᵢₙₜ.* Meanwhile, the gain corresponding to the second output port *yᵢₙₜ* of the first filter ***A*** may be determined as the gain of the second column of the coefficient matrix of the first filter **A,** and may be estimate from the energy of the other pair of direct tab coefficients and cross tab coefficients ***a**_{xy},* and ***a**_{yy},* corresponding to the gain of from all input ports *xᵢₙ*, *yᵢₙₜ* to the second output port *yᵢₙₜ.*

In both examples, the total amount of signal energy from all input ports to all output ports is preserved.

Specifically, in the example shown in Figure 6a, normalization is performed based on the Euclidean norm, ${a}_{xx}^{+ +} = \frac{{a}_{xx}^{+}}{\sqrt{{\left|{a}_{xx}^{+}\right|}^{2} + {\left|{a}_{xy}^{+}\right|}^{2}}} , {a}_{xy}^{+ +} = \frac{{a}_{xy}^{+}}{\sqrt{{\left|{a}_{xx}^{+}\right|}^{2} + {\left|{a}_{xy}^{+}\right|}^{2}}} ,$ ${a}_{yx}^{+ +} = \frac{{a}_{yx}^{+}}{\sqrt{{\left|{a}_{yx}^{+}\right|}^{2} + {\left|{a}_{yy}^{+}\right|}^{2}}} , {a}_{yy}^{+ +} = \frac{{a}_{yy}^{+}}{\sqrt{{\left|{a}_{yx}^{+}\right|}^{2} + {\left|{a}_{yy}^{+}\right|}^{2}}} ,$ ${w}_{x}^{+ +} = {w}_{x}^{+} \sqrt{{\left|{a}_{xx}^{+}\right|}^{2} + {\left|{a}_{xy}^{+}\right|}^{2}}$ ${w}_{y}^{+ +} = {w}_{y}^{+} \sqrt{{\left|{a}_{yx}^{+}\right|}^{2} + {\left|{a}_{yy}^{+}\right|}^{2}}$ where |**a**⁺|² denotes the norm of the filter, represented by the *norm*² block in the figures. The result is denoted as *a*² where *a* is no longer bold since it represents a single scalar.

Similarly, in the example shown in Figure 6b, ${a}_{xx}^{+ +} = \frac{{a}_{xx}^{+ +}}{\sqrt{{\left|{a}_{xx}^{+}\right|}^{2} + {\left|{a}_{yx}^{+}\right|}^{2}}} , {a}_{yx}^{+ +} = \frac{{a}_{yx}^{+ +}}{\sqrt{{\left|{a}_{xx}^{+}\right|}^{2} + {\left|{a}_{yx}^{+}\right|}^{2}}} ,$ ${a}_{xy}^{+ +} = \frac{{a}_{xy}^{+ +}}{\sqrt{{\left|{a}_{xy}^{+}\right|}^{2} + {\left|{a}_{yy}^{+}\right|}^{2}}} , {a}_{yy}^{+ +} = \frac{{a}_{yy}^{+ +}}{\sqrt{{\left|{a}_{xy}^{+}\right|}^{2} + {\left|{a}_{yy}^{+}\right|}^{2}}} ,$ ${w}_{x}^{+ +} = {w}_{x}^{+} \sqrt{{\left|{a}_{xx}^{+}\right|}^{2} + {\left|{a}_{yx}^{+}\right|}^{2}}$ ${w}_{y}^{+ +} = {w}_{y}^{+} \sqrt{{\left|{a}_{xy}^{+}\right|}^{2} + {\left|{a}_{yy}^{+}\right|}^{2}} ;$ wherein, $\sqrt{{\left|{a}_{xx}^{+}\right|}^{2} + {\left|{a}_{xy}^{+}\right|}^{2}}$ and $\sqrt{{\left|{a}_{yx}^{+}\right|}^{2} + {\left|{a}_{yy}^{+}\right|}^{2}}$ are the gains of the first set of coefficients ***A**⁺* in the example shown in Figure 6a and $\sqrt{{\left|{a}_{xx}^{+}\right|}^{2} + {\left|{a}_{yx}^{+}\right|}^{2}}$ and $\sqrt{{\left|{a}_{xy}^{+}\right|}^{2} + {\left|{a}_{yy}^{+}\right|}^{2}}$ are gains of the first set of coefficients ***A**⁺* in the example shown in Figure 6b.

Furthermore, the *norm*² block can be implemented in different ways. The goal of this block is to get an estimate of the energy in all the direct taps (x-x, y-y) and in the cross taps (x-y and y-x). This can for example be extract by only considering the dominant tap with position m in *A,* e.g. ${a}_{xx}^{2} = {\left|{a}_{xx}^{m}\right|}^{2}$ or extract the norm of the full filter, e.g. ${a}_{xx}^{2} = {\left‖{a}_{xx}\right‖}^{2} = {\left|{a}_{xx}^{1}\right|}^{2} + … + {\left|{a}_{xx}^{M}\right|}^{2}$*.* These are equivalent in the special configuration with M=1. Other implementations of the joint normalization block may exist that are mathematically or functionally equivalent.

This method works especially well if for example in the update calculation block, the same error signal, namely the error calculated based on the output symbols {*xₒᵤₜ, yₒᵤₜ*} is used in the training method for determining both the first set of coefficients ***A**⁺* and the second set of coefficients ***w***⁺.

Furthermore, the apparatus 201 and the apparatus 202 are respectively configured to provide the first updated set of coefficients ***A***⁺⁺ and the second updated set of coefficients ***w***⁺⁺ to the first filter and the second filter of the adaptive filter in the coherent receiver respectively.

Thereby, the first updated set of coefficients ***A***⁺⁺ and the second updated set of coefficients ***w***⁺⁺ replace the first set of coefficients ***A**⁺* and the second set of coefficients ***w***⁺.

According to various embodiments, the POL-filter, is enforced to remain approximately orthogonal, which improves its polarization tracking capability. Various embodiments enable fast polarization tracking with simplified channel equalizer structures which are highly suited for low-complexity coherent DSP at the ONU side. High polarization changes can be expected in PON during adverse conditions, especially for aerial fiber, fiber close to train rails, etc.

Various embodiments are also applicable to conventional dual polarization coherent receivers for point-to-point systems, as well as for simplified coherent receivers for PON with single-polarization detection and Alamouti-encoding which employ similar "butterfly" channel equalizers.

In the examples of Figure 5a and 5b, the function of determining the first set of coefficients ***A**⁺* and the second set of coefficients ***w***⁺ based on training updates Δ***A**,* Δ***w*** may be implemented outside the apparatus 201 and 202. In another example, this function may be implemented by the apparatus 203 and 204 as well.

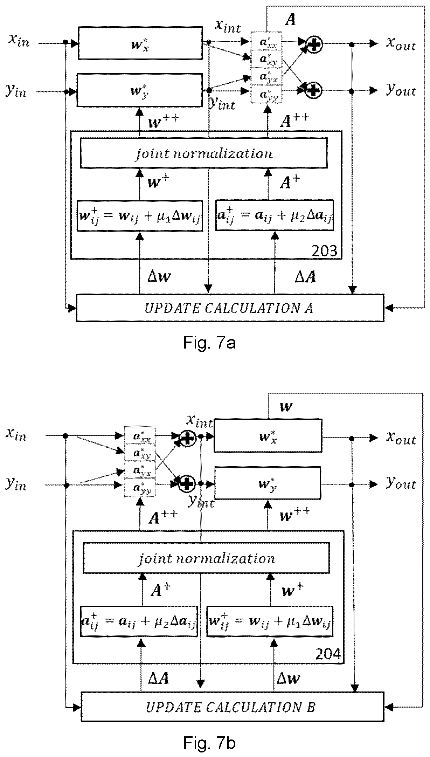

Figures 7a and 7b show schematic block diagrams of example application scenarios of the apparatus 203 and apparatus 204 according to further embodiments.

The functions of the apparatus 201 and 202 elaborated above may be respectively implemented as part of the apparatus 203 and 204, marked as joint normalization.

In the examples of Figures 7a and 7b, the apparatus 203 and 204 may be additionally configured to obtain training updates Δ***A**,* Δ***w*** respectively corresponding to the first filter A and the second filter w from the equalizer of the coherent receiver, and to determine the first set of coefficients ***A**⁺* and the second set of coefficients ***w***⁺ respectively based on the corresponding training updates and a step size corresponding to respective filter.

Specifically, the step size *µ*₂ corresponding to the first filter A may be different from the step size *µ*₁ corresponding to the second filter w. In one embodiment, the step size *µ*₂ corresponding to the first filter A may be higher than the step size *µ*₁ corresponding to the second filter w.

Specifically, the maximum step size for stable operation is known to be proportional to the number of filter taps. In the simplified filter structures considered here, this relationship can be leveraged by employing different step sizes for the **POL** and **ISI** filters. A larger step size can be used to calculate the updated filter ***A**⁺* for faster tracking of polarization changes. Conversely, a smaller step size can be used to calculate the updated filter ***w***⁺ for smaller incremental updates, leading to a better steady-state solution.

Furthermore, the step size *µ*₂ for the first filter update can be dynamically adjusted based on an estimate of the rate of polarization changes. *µ*₂ can be set more aggressively in situations with high PMD and reduced when PMD is low.

In another example, both *µ*₁ and *µ*₂ can initially be set high and decreased to a suitable value to further improve the convergence speed. *µ*₂ can never be too low, since it needs to be able to react to sudden polarization change, but *µ*₁ can be set low if the ISI in the channel is stationary.

Furthermore, the historical equalizer concept may be implemented to further improve the convergence speed.

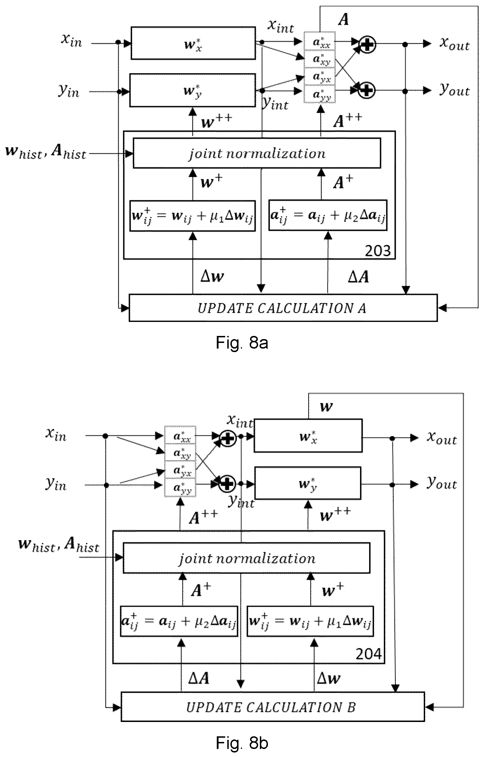

Figures 8a and 8b show schematic block diagrams of further functions of the apparatus 203 and 204 according to the previous embodiments.

Specifically, in the embodiment shown in Figures 8a and 8b, the apparatus 203, 204 may be further configured to store the first set of coefficients ***A**⁺* or the first updated set of coefficients ***A***⁺⁺ as a historical first set of coefficients *Aₕᵢₛₜ*; and/or store the second set of coefficients ***w***⁺ or the second updated set of coefficients ***w***⁺⁺ as a historical second set of coefficients ***w**ₕᵢₛₜ*; and to initialize the equalizer based on the historical first set of coefficients ***A**ₕᵢₛₜ* and/or the historical second set of coefficients ***w**ₕᵢₛₜ.* Joint normalization may be performed based on the historical second set of coefficients ***w**ₕᵢₛₜ* and the historical first set of coefficients ***A**ₕᵢₛₜ.*

Specifically, in an example, at the end of the first burst from an ONU1, the second updated set of coefficients ***w***⁺⁺ may be stored as a historical second set of coefficients ***w**ₕᵢₛₜ*(*ONU*1) for that ONU1. When the second burst arrives, the apparatus according to various embodiments may initialize the second filter **w** with ***w**ₕᵢₛₜ*(*ONU* 1), providing an initial guess based on the previous burst. Since polarization changes can occur between bursts, in one example, the first filter **A** may be initialized with normalized filters in the direct filter (***a**ₓₓ, **a**_{yy}*) and zero filters in the cross filters (***a**_{xy}, **a**_{yx}*), eliminating the need for historical storage of ***A***⁺⁺. Joint normalization may be omitted if this type of initialization is used to initialize the first filter **A.**

In another example, using the historical first set of coefficients (***A**ₕᵢₛₜ*) to initialize the equalizer may be of interest if the polarization changes slowly with respect to the time between two bursts from the same ONU. In one example, the equalizer may be initialized directly with both ***w**ₕᵢₛₜ* and ***A**ₕᵢₛₜ* without further joint normalization, in case ***A**ₕᵢₛₜ* is jointly normalized.

The training loop then starts with some ISI already compensated, leading to faster initial convergence, which is crucial for burst mode operation in PON. After processing the second burst, ***w**ₕᵢₛₜ*(*ONU* 1) is updated with the latest second updated set of coefficients ***w***⁺⁺ , ensuring it remains up-to-date.

This approach takes advantage of the fact that the ISI-filter, which tracks slow variations, is likely to remain relatively constant between bursts from the same ONU.

Alternatively, a predetermined set of coefficients ***w**_{predetermined}* corresponding to the ISI filter may be used as the initial state for all bursts. This simplifies memory requirements and implementation but might reduce the gains in initial convergence speed.

The apparatus according to various embodiments may be further configured to determine a state-of-polarization (SOP) based on at least part of the first updated set of coefficients ***A***⁺⁺. Specifically, the SOP may be represented by at least one of: Stokes parameters, Jones vector, and Mueller matrix, etc. In an example, the apparatus according to various embodiments may be further configured to determine the SOP based on one column of the first updated set of coefficients ***A***⁺⁺.

Various embodiments provide more accurate extraction of SOP information from the channel equalization block for fiber sensing use cases.

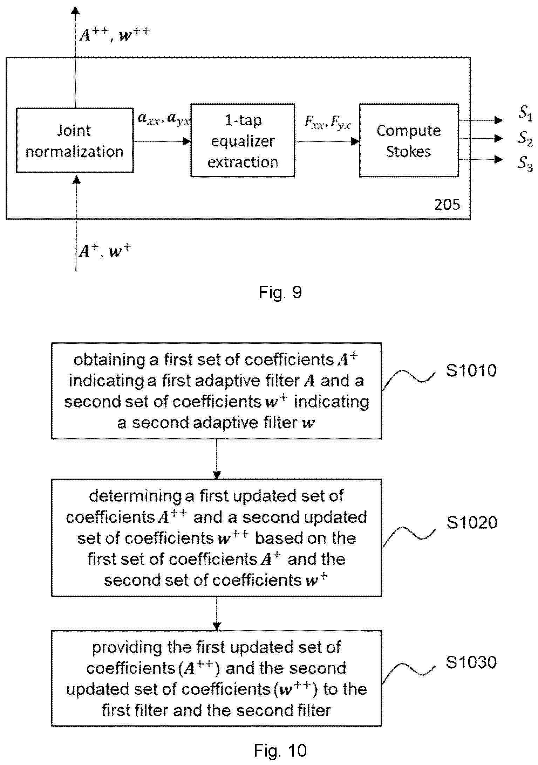

Figure 9 shows a schematic block diagram of further functions of an apparatus 205 according to a further embodiment.

A skilled person should understand, the additional functions shown in Figure 9 may be combined with the apparatus 201, 202, 203 and 204 with necessary amendment as well.

Specifically, the apparatus 205 may be further configured to determine a third set of coefficients **F** indicating a MIMO filter with a single tap based on at least part of the first updated set of coefficients ***A***⁺⁺, and to determine the SOP based on at least part of the third set of coefficients **F.**

More specifically, the third set of coefficients **F** may comprise a pair of direct tap coefficients and cross tap coefficients, for example, *Fₓₓ, F_{yx}.* In one example,

*Fₓₓ, F_{yx}* may respectively comprise a dominant tap selected in each branch from the first updated set of coefficients ***A***⁺⁺, Alternatively, in another example, *Fₓₓ, F_{yx} may* comprise coefficients indicating respective average value across taps in each branch of the first updated set of coefficients ***A***⁺⁺.

Various methods may be implemented to determine SOP based on at least part of the third set of coefficients F.

In one example, The Stokes parameters ${S}_{x} = \left({S}_{0}^{x}, {S}_{1}^{x}, {S}_{2}^{x}, {S}_{3}^{x}\right)$ may be determined based on *Fₓₓ* and *F_{yx}* in below formulas: ${S}_{0} = {\left|{F}_{xx}\right|}^{2} + {\left|{F}_{yx}\right|}^{2}$ ${S}_{1} = \frac{{\left|{F}_{xx}\right|}^{2} - {\left|{F}_{yx}\right|}^{2}}{{S}_{0}}$ ${S}_{2} = \frac{2 Re \left({F}_{yx}{F}_{xx}^{∗}\right)}{{S}_{0}}$ ${S}_{3} = \frac{- 2 Im \left({F}_{yx}{F}_{xx}^{∗}\right)}{{S}_{0}} .$ Where *Re(F)* and *Im(F)* denotes the real and imaginary component of F respectively.

Figure 10 shows a flow diagram according to example methods implementing various embodiments.

In the example of Figure 10, all method steps may be implemented in the apparatus 201, 202, 203, 204, 205 inside the coherent transceiver. Alternatively, some of the method steps may be implemented by the coherent transceiver. and some of the method steps may be implemented for example in the apparatus 201, 202, 203, 204, 205 outside the coherent transceiver and communicatively connected to the coherent transceiver. The coherent receiver may be implemented at an ONU or at an OLT.

In Figure 10, in step S1010, the method starts with obtaining a first set of coefficients ***A**⁺* indicating a first adaptive filter ***A*** configured to reduce at least part of polarization mode dispersion in an equalizer of the coherent receiver and a second set of coefficients ***w***⁺ indicating a second adaptive filter **w** configured to reduce at least part of the inter-symbol interference in the equalizer of the coherent receiver.

In step S1020, the method continues with determining a first updated set of coefficients ***A***⁺⁺ and a second updated set of coefficients ***w***⁺⁺ based on the first set of coefficients ***A**⁺* and the second set of coefficients ***w***⁺, wherein the gains of the first updated set of coefficients ***A***⁺⁺ have a predetermined level, and wherein, the output of the equalizer based on the first set of coefficients ***A**⁺* and the second set of coefficients ***w***⁺ is approximately same as the output of the equalizer based on the first updated set of coefficients ***A***⁺⁺ and the second updated set of coefficients ***w***⁺⁺.

In step S1030, the method ends with providing the first updated set of coefficients ***A***⁺⁺ and the second updated set of coefficients ***w***⁺⁺ to the first filter and the second filter respectively.

The procedure from S1010 to S1030 may be repeated, for example, every update cycle of the equalizer, every N update cycles of the equalizer, or every time the variation of the norm of A exceeds a certain threshold, etc.

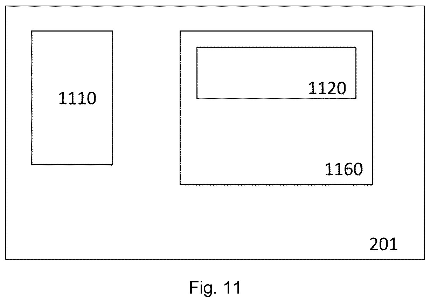

Figure 11 shows an example block diagram of an apparatus 201 operating in accordance with various embodiment.

A skilled person should understand, the example block diagram shown in Figure 11 is also applicable to the apparatus 202, 203, 204, and 205.

Specifically, the apparatus 201 includes a processor 1110 and a memory 1160. In other examples, the apparatus 201 may comprise multiple processors.

In the example of Figure 11, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 201 as explained above. In other examples, the apparatus 201 may comprise more than one memory 1160 or different kinds of storage devices.

Computer program instructions 1120 for enabling implementations of example embodiments of the invention or a part of such computer program instructions may be loaded onto the apparatus 201 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 201 comprises means, wherein the means comprises at least one processor 1110, at least one memory 1160 including computer program code 1120, the at least one memory 1160 and the computer program code 1120 configured to, with the at least one processor 1110, cause the performance of the apparatus 201.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 11. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (201, 202, 203, 204) for use by a coherent receiver, comprising means for:
- obtaining a first set of coefficients (***A**⁺*) indicating a first adaptive filter *(A)* configured to reduce at least part of polarization mode dispersion in an equalizer of the coherent receiver and a second set of coefficients (***w***⁺) indicating a second adaptive filter **(w)** configured to reduce at least part of the inter-symbol interference in the equalizer of the coherent receiver,
- determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺),
- providing the first updated set of coefficients (***A***⁺⁺) and the second updated set of coefficients (***w***⁺⁺) to the first filter and the second filter respectively.

2. The apparatus (201, 202, 203, 204) according to claim 1, wherein, the predetermined level is 1.

3. The apparatus (201, 202, 203, 204) according to any preceding claim, wherein the means are further configured for:
- scaling the first set of coefficients (***A***⁺), such that the gains of the first updated set of coefficients (***A***⁺⁺) reaches the predetermined level, and
- scaling the second set of coefficients (***w***⁺), such that the second updated set of coefficients (***w***⁺⁺) compensates the scaling of the first set of coefficients (***A**⁺*)*.*

4. The apparatus (201, 202, 203, 204) according to any preceding claim, wherein, the first filter (A) is a Multi-Input Multi-Output, MIMO, filter, and the gains of the first updated set of coefficients (***A***⁺⁺) comprises gains corresponding to respective input ports/output ports of the first filter **(A)** connected to the second filter **(w).**

5. The apparatus (201, 202, 203, 204) according to any preceding claim, wherein the first filter (A) is a MIMO filter with M filter taps in each branch, and the second filter (w) comprises a plurality of Single-Input Single-Output, SISO, filters respectively with N taps, wherein, N and M are integer numbers.

6. The apparatus (201, 202, 203, 204) according to the preceding claim, wherein, the first filter (***A***) is a 2×2 MIMO filter, and the second filter **(w)** comprises two SISO filters.

7. The apparatus (201, 202, 203, 204) according to any of claims 5-6, wherein, M=1.

8. The apparatus (201, 202) according to any preceding claim, wherein the means are further configured for:
- obtaining the first set of coefficients (***A**⁺*) and the second set of coefficients (***w***⁺) from the equalizer of the coherent receiver.

9. The apparatus (203, 204) according to any of claims 1-7, wherein the means are further configured for:
- obtaining training updates (Δ***A**,* Δ***w***) respectively corresponding to the first filter and the second filter from the equalizer of the coherent receiver,
- determining the first set of coefficients (***A**⁺*) and the second set of coefficients (***w***⁺) respectively based on the corresponding training updates and a step size corresponding to respective filter.

10. The apparatus (203, 204) according to the preceding claim, wherein the step size corresponding to the first filter is higher than the step size corresponding to the second filter.

11. The apparatus (201, 202, 203, 204) according to any preceding claim, wherein the means are further configured for:
- storing the first set of coefficients (***A**⁺*) or the first updated set of coefficients (***A***⁺⁺) as a historical first set of coefficients (***A**ₕᵢₛₜ*); and/or
- storing the second set of coefficients (***w***⁺) or the second updated set of coefficients (***w***⁺⁺) as a historical second set of coefficients (***w**ₕᵢₛₜ*); and
- initializing the equalizer based on the historical first set of coefficients (***A**ᵣᵢₛₜ*) and/or the historical second set of coefficients (***w**ₕᵢₛₜ*)*.*

12. The apparatus (201, 202, 203, 204) according to any preceding claim, wherein the means are further configured for:
- determining a state-of-polarization based on at least part of the first updated set of coefficients (***A***⁺⁺).

13. The apparatus (201, 202, 203, 204) according to the preceding claim, the means are further configured for:
- determining a third set of coefficients **(F)** indicating a MIMO filter with a single tap based on at least part of the first updated set of coefficients (***A***⁺⁺),
- determining the state-of-polarization based on at least part of the third set of coefficients **(F).**

14. A method, comprising:
- obtaining a first set of coefficients (***A**⁺*) indicating a first adaptive filter ***(A)*** configured to reduce at least part of polarization mode dispersion in an equalizer of the coherent receiver and a second set of coefficients (***w***⁺) indicating a second adaptive filter **(w)** configured to reduce at least part of the inter-symbol interference in the equalizer of the coherent receiver,
- determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺),
- providing the first updated set of coefficients (***A***⁺⁺) and the second updated set of coefficients (***w***⁺⁺) to the first filter and the second filter respectively.

15. A computer program comprising instructions for causing an apparatus to perform at least the following:
- obtaining a first set of coefficients (***A**⁺*) indicating a first adaptive filter ***(A)*** configured to reduce at least part of polarization mode dispersion in an equalizer of the coherent receiver and a second set of coefficients (***w***⁺) indicating a second adaptive filter **(w)** configured to reduce at least part of the inter-symbol interference in the equalizer of the coherent receiver,
- determining a first updated set of coefficients (***A***⁺⁺) and a second updated set of coefficients (***w***⁺⁺) based on the first set of coefficients (***A**⁺*) and the second set of coefficients (***w***⁺), wherein the gains of the first updated set of coefficients (***A***⁺⁺) have a predetermined level, and wherein, the output of the equalizer based on the first set of coefficients (***A**⁺*) and the second set of coefficients (***w***⁺) is approximately same as the output of the equalizer based on the first updated set of coefficients (***A***⁺⁺) and the second updated set of coefficients (***w***⁺⁺),
- providing the first updated set of coefficients (***A***⁺⁺) and the second updated set of coefficients (***w***⁺⁺) to the first filter and the second filter respectively.
